## Europäisches Patentamt
## European Patent Office
## Office européen des brevets

(19)

(11) Numéro de publication: **0 087 334**
**A1**

(12) **DEMANDE DE BREVET EUROPEEN**

(21) Numéro de dépôt: **83400212.3**

(22) Date de dépôt: **01.02.83**

(51) Int. Cl.³: **A 01 B 61/04**

(30) Priorité: **24.02.82 FR 8203010**

(43) Date de publication de la demande:
**31.08.83 Bulletin 83/35**

(84) Etats contractants désignés:
**AT BE CH DE GB IT LI LU NL SE**

(71) Demandeur: **CHARRUES NAUD Société Anonyme dite:**
**Route Départementale 752 Andreze**
**F-49600 Beaupreau(FR)**

(72) Inventeur: **Naud, Georges**
**Route Départementale 752 Andreze**
**F-49600 Beaupreau(FR)**

(74) Mandataire: **Faber, Jean-Paul**
**CABINET FABER 34, rue de Leningrad**
**F-75008 Paris(FR)**

(54) Dispositif de sécurité pour charrues.

(57) Perfectionnements aux charrues du type comportant un bâti (1) destiné à être attelé à l'arrière d'un tracteur, au moins un age (5) portant au voisinage de l'extrémité arrière, un étançon supportant un soc et un versoir tandis que l'autre extrémité est montée basculante sur un axe situé au-dessus de l'axe longitudinal de l'age (5) à l'encontre d'un ressort de compression (32) logé axialement dans un logement de l'age et relié par un bras au bâti (1), caractérisés en ce que le bras comprend deux tirants (35) disposés de part et d'autre de l'age (5) et articulés à l'une de leurs extrémités sur un axe (39) situé en avant de l'axe de basculement de l'age (5) par rapport à la direction d'avancement de la charrue, tandis que l'autre extrémité est reliée à un axe (21) solidaire d'un organe d'appui mobile dans le logement de l'age et coopérant avec le ressort (32).

FIG.2

1

La présente invention se rapporte à des charrues réversibles destinées à être attelées à l'arrière d'un tracteur et du type polysocs.

L'invention vise les charrues appelées "non stop", c'est à dire les charrues comprenant une tête d'attelage destinée à être fixée au dispositif de relevage trois points d'un tracteur, une poutre d'une certaine longueur, une série d'ages supportant les différents organes de travail du sol, chaque age étant relié à la poutre à travers un système de sécurité agencé de manière que, lorsque les socs rencontrent une résistance supérieure à un seuil donné, l'age bascule pour permettre aux outils de s'effacer à l'encontre de moyens permettant de le ramener dans sa position initiale correspondant à la position de travail des outils, ces moyens permettant donc de replacer l'age en position de travail dès que le point de résistance anormale a été franchi.

On connait différents systèmes de charrues dites "non stop". Parmi ces systèmes, on peut citer un montage hydraulique qui prévoit, pour chaque age, au moins un verin hydraulique relié à une bâche sous pression. Dans cette position, lorsqu'un soc rencontre une résistance trop forte, l'age correspondant bascule contre l'action du verin dont l'huile contenue dans le corps est envoyée, sous l'effet du déplacement du piston, dans la bâche. La pression augmentant dans cette dernière, tend à être renvoyée dans le cylindre du verin afin que, lorsque le point de trop grande résistance dans le sol a été franchi, l'age retourne dans sa position initiale.

Une telle disposition présente de nombreux inconvénients. Le système est complexe et le réglage délicat, le temps de réponse pour ramener l'age dans sa position initiale est lent, et il est très difficile de réaliser un réglage pour chaque age.

Un autre système prévoit de réaliser des ages creux montés basculants sur une platine portée par la poutre et traversés par une tige articulée sur la platine par une ex- trèmité et dont l'autre extrémité est reliée à un organe coulissant sur ledit age avec interposition de ressorts à lames . Un tel système présente l'inconvénient que, si le basculement de l'age est trop important, pratiquement les ressorts à lames ne commandent plus la remise en service de l'age.

La Demanderesse a proposé, dans son brevet français n° 76.37.223 une réalisation qui, par rapport aux autres systèmes, s'est révélée plus avantageuse. La charrue décrite dans le brevet français de la Demanderesse prévoyait un age creux monté basculant sur une platine de la poutre sur des tourillons situés au-dessus de l'axe longitudinal de l'age, celui-ci comportant intérieurement, une butée contre laquelle prend appui un ressort de compression et étant traversé par une tige articulée sur la platine, s'étendant dans le ressort et dont l'extrémité libre filetée reçoit un écrou pour comprimer le ressort.

Une telle disposition fonctionne parfaitement et permet un réglage aisé des différents ages, toutefois, à l'usage, on a constaté différents défauts. Un inconvénient est que certains utilisateurs ont serrés les écrous le plus possible, en insérant même des cales de sorte que le montage est devenu rigide et que des charrues se sont ainsi trouvées endommagées. Un autre inconvénient réside dans le fait que plus l'age bascule, plus le ressort se comprime et plus les efforts subits par les différentes pièces sont importants ce qui conduit obligatoirement à réaliser une charrue beaucoup plus solide que cela ne serait nécessaire en réalité et, par conséquent, beaucoup plus lourde et onéreuse.

L'un des buts de la présente invention est de réaliser une charrue du type "non stop" qui remédie à ces divers inconvénients.

Les perfectionnements selon l'invention s'appliquent à des charrues du type comportant un bâti destiné à être attelé à l'arrière d'un tracteur, au moins un age portant au voisinage de l'extrémité arrière un étançon supportant un soc et un versoir tandis que l'autre extrémité est montée basculante sur un axe situé au dessus de l'axe longitudinal de l'age à l'encontre d'un ressort de compression logé axialement dans un logement de l'age et relié par un bras au bâti et sont caractérisés en ce que le bras est constitué par deux tirants disposés de part et d'autre de l'age et articulés à l'une de leurs extrémités sur un axe situé en avant de l'axe de basculement de l'age par rapport à la direction d'avancement de la charrue tandis que l'autre extrémité est reliée à un axe solidaire d'un organe d'appui mobile dans le logement de l'age et coopérant avec le ressort.

Grâce à cette disposition, on peut réaliser une charrue dite "non stop" dans laquelle, au cours du basculement de l'age, lorsque le soc rencontre une résistance dépassant un seuil déterminé, le ressort, dont un réglage de la compression a déjà été effectué, n'est pas soumis à une compression supplémentaire importante, de sorte que les pièces mobiles sont soumises à des efforts beaucoup moins importants.

De préférence, pour faciliter un éventuel grand déplacement angulaire de l'age, chaque tirant est en deux parties reliées articulées l'une à l'extrémité de l'autre.

Suivant une caractéristique constructive particulière, l'organe d'appui comporte une noix comportant deux bouts d'axes coaxiaux traversant des lumières allongées axialement de l'age et sur lesquels s'articulent les extrémités correspondantes des tirants, ladite noix comportant un trou lisse pour le passage d'une vis de réglage se vissant dans un écrou, ladite vis, par son extrémité libre, coopérant avec une plaque appliquée contre l'extrémité correspondante du ressort. Ainsi, le réglage de la tension du ressort est limité à la longueur de la vis, ce qui évite des réglages excessifs risquant de bloquer l'age.

Enfin, suivant une dernière caractéristique, la noix comporte, du côté de l'écrou, un siège en forme de calotte sphérique, ledit écrou comportant une tête correspondante, tandis que l'extrémité libre de la vis est arrondie et co-

4

**0087334**

opére avec un siège de la plaque en forme de calotte sphérique, les tirants étant élastiques. Ainsi, l'age peut être déporté latéralement ce qui constitue une sécurité complémentaire.



L'invention va maintenant être décrite avec plus de détails en se référant à un mode de réalisation particulier donné à titre d'exemple seulement et représenté aux dessins annexés dans lesquels :

figure 1 est une vue en élevation d'une charrue perfectionnée selon l'invention.

Figure 2 est une vue en perspective à plus grande échelle d'un age.

figure 3 est une vue en coupe longitudinale de l'age de la figure 2.

Figure 4 montre en coupe, l'age basculé.

La charrue représentée comprend un bâti formé d'une poutre 1 dont l'extrémité antérieure comporte des moyens d'attelage 2 à un dispositif de relevage trois points d'un tracteur et un verin 3 de commande de retournement.

La charrue comporte trois ages 4,5 et 6 qui sont identiques et montés de la même façon sur la poutre, chaque age comportant des étançons 7 supportant des socs 8 et des versoirs 9.

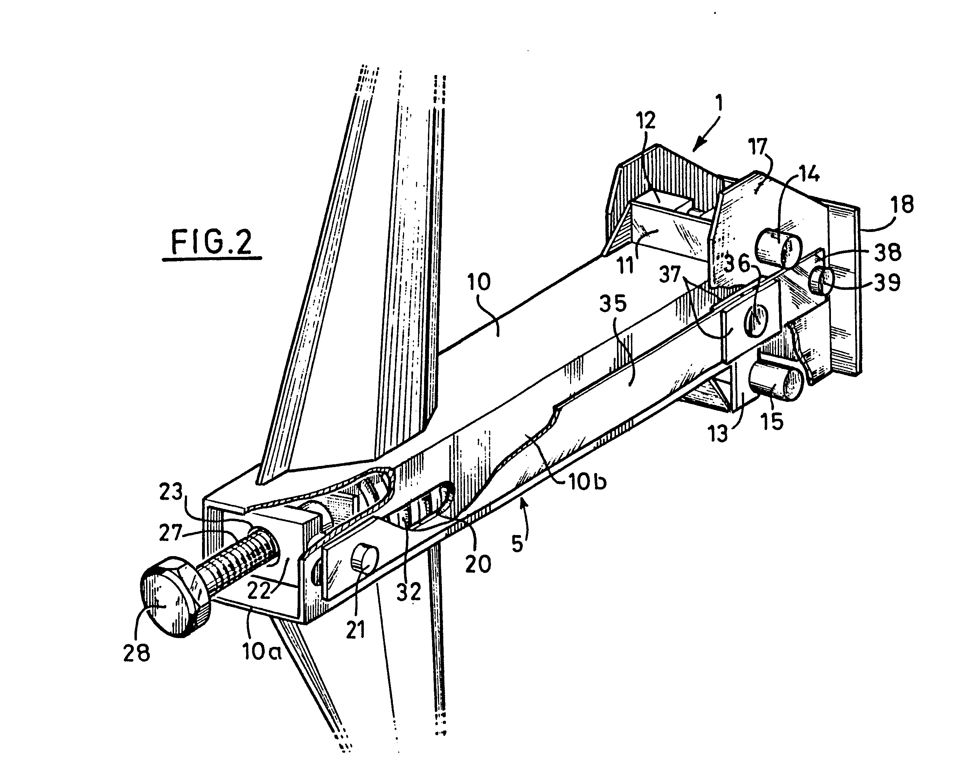

Aux figures 2, 3 et 4, on a représenté, à plus grande échelle, l'un des ages, par exemple l'age 5 celui-ci étant constitué par un corps tubulaire 10 à section carrée dont l'extrémité antérieure comporte une plaque 11 pourvue de deux sièges cylindriques 12 et 13 destinés à coopérer avec des tourillons respectivement 14 et 15 portés par les ailes d'une chape 17 solidaire d'une platine 18 fixée sur la poutre 1.

Les sièges 12 et 13 sont disposés pour être décalés en hauteur par rapport à l'axe longitudinal de l'age.

Les parois latérales 10a et 10b du corps 10 comportent des lumières allongées 20 qui sont traversées par des axes 21 solidaires d'une noix 22 comportant un trou lisse central 23, ladite noix, du côté de la plaque 11, comportant un siège 24 en forme de calotte sphérique qui coopére avec un siège correspondant 25 d'un écrou 26 dans lequel se visse une vis de réglage 27 traversant le trou lisse 23 et dont l'une des extrémités comporte un six pans 28, tandis que l'autre extrémité arrondie 29 est destinée à porter contre un siège 30 en forme de calotte sphérique prévu sur une plaque 31 destinée à coopérer avec l'une des extrémités d'un ressort de compression 32 logé dans le corps 10 et dont l'autre extrémité bute contre la plaque 11.

Sur chaque axe 21 s'articule l'une des extrémités d'un tirant 35 dont l'autre extrémité est articulée sur un axe 36 supporté par une chape 37 solidaire de l'une des extrémités d'une biellette 38 articulée sur un axe 39 supporté par la chape 17 et disposé en arrière d'un plan passant par les tourillons 14 et 15.

En serrant la vis 27, on engage celle-ci dans le corps 10 et sa partie 29, en coopérant avec le siège 30 de la plaque 31, compresse le ressort 32 inséré entre la plaque 11 et ladite plaque 31. Plus le ressort 32 est comprimé, plus la résistance rencontrée par le sac devra être importante pour que l'age bascule. Toutefois, comme on est limité pour comprimer le ressort 32 à la longueur de la vis 27, il est impossible de comprimer celui-ci au delà d'une limite après laquelle le montage serait rigide et où l'age ne pivoterait plus. Ceci constitue une sécurité contre des réglages qui risqueraient de devenir dangereux pour les différents organes de la charrue.

Comme le montage des pièces est relativement compliqué, on ne risque pas de voir l'utilisateur insérer des cales pour comprimer le ressort plus que ne le prévoit le constructeur comme on a pu le constater dans la technique antérieure.

Le fonctionnement est le suivant :

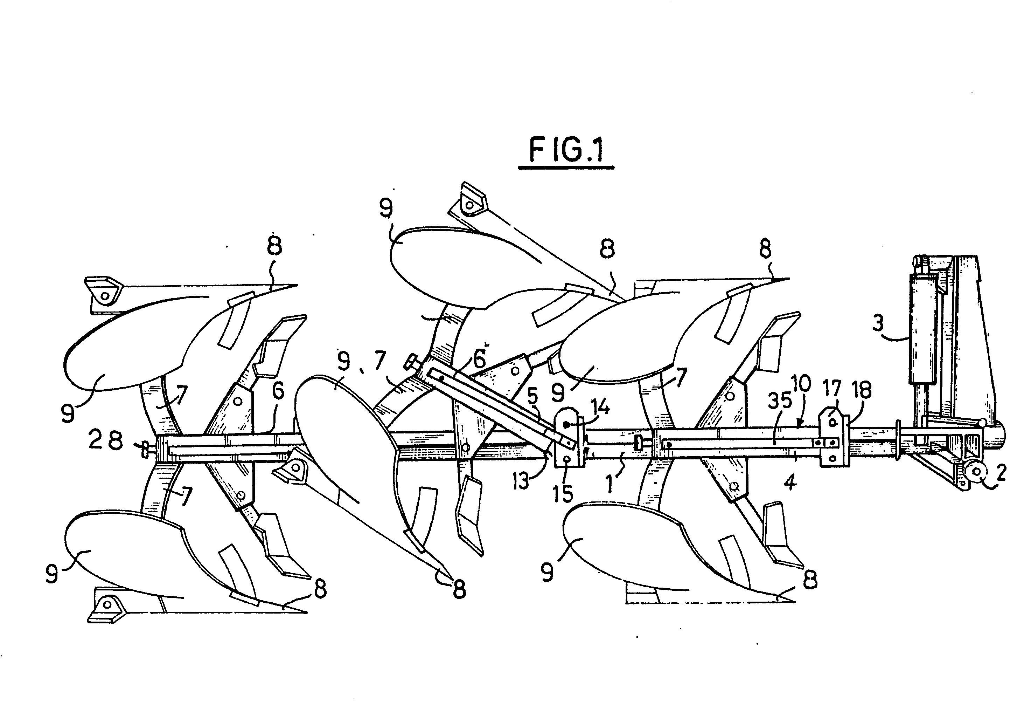

On règle la tension du ressort 32 en faisant tourner la vis 27 dans le sens de vissage. En position de travail, les ages occupent la position des ages 4 et 6 (Voir Fig. 1).

Si un soc 8, engagé dans le sol, rencontre une résistance anormale, l'age correspondant tend à basculer vers une position correspondant à celle de l'age 5 (fig. 1).

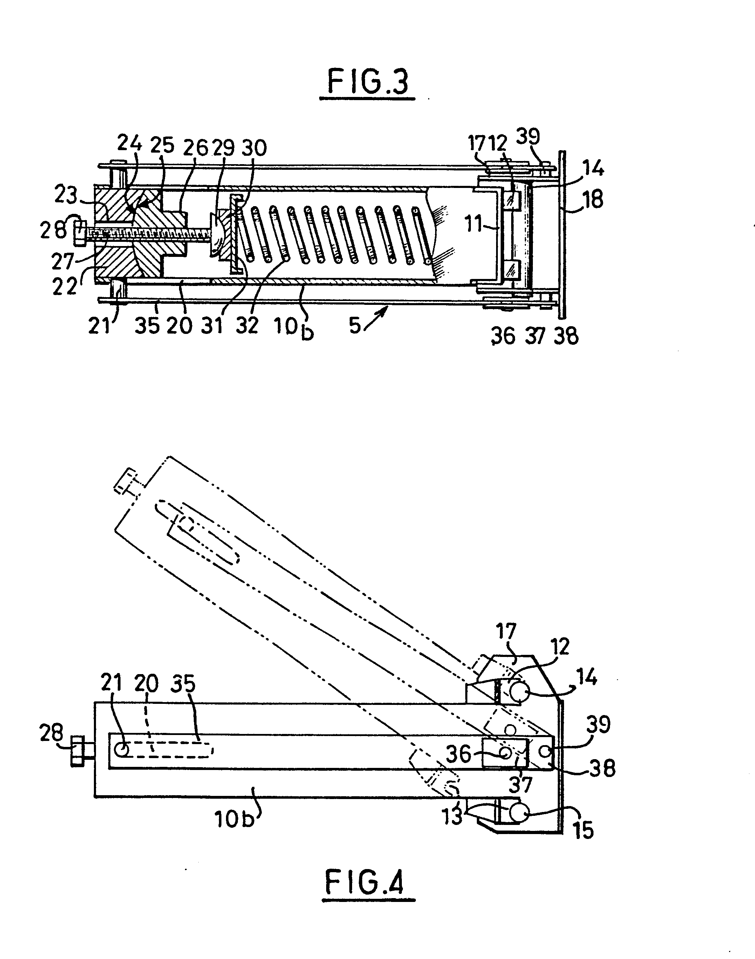

Lors de ce basculement, le siège 12 pivote sur le tourillon 14(fig. 4) à l'encontre du ressort 32.

En effet, comme le corps 10 et les tirants 35 basculent autour de deux axes décalés, lors du pivotement de l'age, les tirants 35 tendent à déplacer la noix 22 dans le sens de la compression du ressort de sorte que celui-ci en tendant à revenir dans sa position initiale tend à ramener l'age vers sa position de travail.

Comme les axes de pivotement du corps 10 (axe 14) et les tirants 35 (axe 39) sont situés au voisinage l'un de l'autre, les déplacements de la noix 22 sont faibles de sorte que les efforts auxquels sont soumis les différentes pièces sont très inférieurs à ceux auxquels elles sont soumises dans les réalisations de la technique antérieure.

On a décrit le fonctionnement la charrue étant supposée travailler dans le sens représenté à la figure 1. Il est bien évident que la charrue fonctionne exactement de la même façon lorsqu'elle occupe une position décalée de 180° par rapport à la position de la figure 1.

Les tirants 35 et les biellettes 38 sont montés avec un certain jeu et sur les axes 21 et 39, ces éléments sont en acier de manière que les ages puissent se déporter latéralement, si les socs rencontrent des points durs dans le sol. Ce déport latéral  est facilité par les sièges 24,25 ainsi que par la forme sphérique de la vis 29 qui coopére avec le siège 30.

Bien entendu, l'invention n'est pas limitée au mode de réalisation qui vient d'être décrit et représenté. On pourra y apporter de nombreuses modifications de détails sans sortir, pour cela, du cadre de l'invention.

8

**0087334**

1° - Perfectionnements aux charrues du type comportant un bâti (1) destiné à être attelé à l'arrière d'un tracteur, au moins un age (4,5,6) portant au voisinage de l'extrémité arrière, un étançon supportant un soc (8) et un versoir (9) tandis que l'autre extrémité est montée basculante sur un axe situé au-dessus de l'axe longitudinal de l'age à l'encontre d'un ressort de compression logé axialement dans un logement de l'age et relié par un bras au bâti (1), caractérisés en ce que le bras est constitué par deux tirants (35) disposés de part et d'autre de l'age et articulés à l'une de leurs extrémités sur un axe (39) situé en avant de l'axe de basculement de l'age par rapport à la direction d'avancement de la charrue tandis que l'autre extrémité est reliée à un axe (21) solidaire d'un organe d'appui mobile dans le logement de l'age et coopérant avec le ressort (32).

2° - Perfectionnements aux charrues, selon la revendication 1, caractérisés en ce que chaque tirant (35) est en deux parties reliées articulées l'une à l'extrémité de l' autre.

3° - Perfectionnements aux charrues, selon la revendication 1, caractérisés en ce que l'organe d'appui comporte une noix (22) comportant deux bouts d'axes coaxiaux (24) traversant des lumières allongées axialement de l'age et sur lesquels s'articulent les extrémités correspondantes des tirants (35), ladite noix comportant un trou lisse (23) pour le passage d'une vis de réglage (27) se vissant dans un écrou (26), ladite vis, par son extrémité libre, coopérant avec une plaque (31) appliquée contre l'extrémité correspondante du ressort (32).

4° - Perfectionnements aux charrues, selon la revendication 3, caractérisés en ce que la noix (22) comporte, du côté de l'écrou (26) un siège (24) en forme de calotte sphérique, ledit écrou (26) comportant une tête correspondante, tandis que l'extrémité libre de la vis (29) est arrondie et coopère avec un siège (30) de la plaque (31) en forme de calotte sphérique, les tirants étant élastiques.

FIG.1

FIG.2

0087334

## FIG.3

## FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 310 690 (HUARD-UCF.SCM) | | A 01 B 61/04 |
| A | FR-A-2 386 238 (ETABL.GREGOIRE-BESSON ET CIE) | | |
| A | GB-A-2 053 635 (DOWDESWELL) | | |
| A | FR-A-2 323 306 (BOLDRIN) | | |
| D,A | FR-A-2 373 217 (SOC.D'EXPLOITATION DES CHARUVES NAUD) | | |

DOMAINES TECHNIQUES RECHERCHES (Int. Cl. ³)

A 01 B

Le présent rapport de recherche a été établi pour toutes les revendications

| Lieu de la recherche | Date d'achèvement de la recherche | Examinateur |
|---|---|---|
| LA HAYE | 31-05-1983 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82